# EUROPÄISCHE PATENTSCHRIFT

(11) **EP 1 241 337 B1**
(45) Veröffentlichungstag und Bekanntmachung des Hinweises auf die Patenterteilung: **07.12.2005**
(21) Anmeldenummer: 01127009.7
(22) Anmeldetag: 14.11.2001
(51) Int. Cl.: F02D 41/34, F02P 5/15, F02P 15/08

(54) **Verfahren zur Phasendetektion mittels Zündzeitpunktvariation**
Method for phase detection by ignition timing variation
Méthode pour détecter la phase par variation de l'avance à l'allumage

(30) Priorität: 09.03.2001 DE 10111479
(43) Veröffentlichungstag der Anmeldung: 18.09.2002
(73) Patentinhaber: ROBERT BOSCH GMBH, 70442 Stuttgart (DE)
(72) Erfinder: Boerkel, Wolfgang, 71701 Wurmberg (DE)

(56) Entgegenhaltungen:
- WO-A-99/19616
- DE-A- 4 122 786
- DE-A- 4 242 419
- DE-A- 4 418 579
- DE-A- 19 918 664
- US-A- 5 970 784

## Beschreibung

### Technisches Gebiet

Zur Erfassung der Kurbelwellenwinkellage in mehrzylindrigen Brennkraftmaschinen werden Geber eingesetzt, welche ein mit der Kurbelwelle drehfest verbundenes Geberrad kontinuierlich abtasten. Üblicherweise dienen hierzu Zahnkränze, die an einer dem oberen Totpunkt (OT) einer der Kolben der Maschine zugeordneten Stelle eine Unregelmäßigkeit aufweisen. Der Geber erzeugt jedoch nur dann ein eindeutiges Signal für Zünd- bzw. Einspritzvorgänge zugeordneten Drehwinkeln, wenn ein derartiger Vorgang bei jedem Erreichen eines Drehwinkels ausgelöst werden muß. Bei Viertakt-Brennkraftmaschinen erstreckt sich jedoch der Arbeitstakt über 720° Kurbelwinkel, mithin fallen zwei dem oberen Totpunkt entsprechende Signale an.

### Stand der Technik

DE 41 22 786 A1 bezieht sich auf ein Verfahren zur Identifikation des einem Zünd- oder Einspritzvorgang zugeordneten Drehwinkels einer Brennkraftmaschine. Der Arbeitszyklus der Brennkraftmaschine erstreckt sich über zumindest zwei Umdrehungen ihrer Ausgangswelle. Es werden Zünd- bzw. Einspritzvorgänge initiiert, worauf eine Ist-Reaktion der Maschine auf diese Zünd- bzw. Einspritzvorgänge ermittelt wird und mit einer Soll-Reaktion auf beim zugeordneten Drehwinkel erfolgende Zünd- und Einspritzvorgänge verglichen wird.

EP 0 826 090 B1 betrifft ein Verfahren zur Erkennung der Phase der Zylinder einer Mehrzylinder-Viertaktbrennkraftmaschine. Gemäß dieser Lösung ist ein mehrzylindriger Verbrennungsmotor mit einer Zündanlage zur individuellen Steuerung für jeden Zylinder ausgerüstet und umfaßt einen Meßfühler zum Erzeugen eines Signals, welches erlaubt, den Durchgang des Kolbens eines Bezugszylinders des Motors in einer bestimmten Position zu identifizieren. Gemäß des in EP 0 826 099 B1 vorgestellten Verfahrens wird ein Zyklus von mehreren Schritten durchlaufen wobei zunächst bei dem Bezugszylinder und zu einem gegebenen Augenblick, der mit dem Durchgang des Kolbens des Bezugszylinders in der vorbestimmten Position verbunden ist, eine Störung derart gesteuert wird, daß eine Variation der Betriebsweise des Motors herbeigeführt wird. Anschließend wird die Betriebsweise des Motors beobachtet und eine sich aus der Steuerung der Störung bei dem Bezugszylinder ergebende mögliche Variation der Betriebsweise erfaßt sowie der Augenblick des plötzlichen Eintretens der Variation der Betriebsweise oder ein Nicht-Auftreten einer Variation der Betriebsweise des Motors erfaßt. Anschließend wird der gegebene Augenblick der Steuerung der Störung dem erfaßten Augenblick des plötzlichen Auftretens der Variation in der Betriebsweise des Motors oder dem Nicht-Auftreten einer Variation der Betriebsweise des Motors gegenübergestellt, um die Phase des Motorzyklus' abzuleiten, in welchem sich der Bezugszylinder in der bestimmten Position befindet. Schließlich wird ausgehend von der Kenntnis der Phase des Bezugszylinders die Phase eines Zylinders der Verbrennungskraftmaschine erkannt. Mittels der in EP 0 826 099 B1 vorgeschlagenen Lösung besteht die Steuerung der Störung darin, daß eine Modifikation der Zündenergie im Vergleich zu einer normalen Betriebsweise gesteuert wird und zwar anders als durch eine vollständige Unterbrechung der Zündsteuerung und daß die Erfassung der sich daraus ergebenden möglichen Variationen der Betriebsweise des Motors darin besteht, eine mögliche Variation des Drehmomentes und einen Augenblick des plötzlichen Auftretens der Variation des Drehmomentes zu erfassen.

Neben den oben skizzierten Lösungen besteht die Möglichkeit, bei ausgefallenem Phasengeber einfache Notlauffunktionen dadurch zu realisieren, daß auf redundante Geber oder Geber an einer anderen Zylinderbank der Verbrennungskraftmaschine umgeschaltet wird. Ferner läßt sich die Phasenlage aus einer Motorabstellposition heranziehen.

### Vorteile der Erfindung

Die Vorteile der erfindungsgemäßen Lösung sind vor allem darin zu erblicken, daß mit dem erfindungsgemäß vorgeschlagenen Verfahren eine Phasenerkennung an einer Verbrennungskraftmaschine ohne Phasensensor ermöglicht werden kann. Bei unbekannter Phasenlage der Zylinder einer mehrzylindrigen Verbrennungskraftmaschine wird eine Phasenlage angenommen. Die angenommene Phasenlage kann z.B. die Phasenlage der Kurbelwelle der Verbrennungskraftmaschine sein, die diese beim Abstellen eingenommen hat. Die Verbrennungskraftmaschine wird zunächst mit doppelter Zündausgabe gestartet. Nun erfolgt unter Zugrundelegung der angenommenen Phasenlage der Verbrennungskraftmaschine eine Verspätung des Zündzeitpuntkes eines Zylinders oder von mehreren gemäß der Zündreihenfolge benachbarter Zylinder. Die Verspätung des Zündzeitpunktes erfolgt jedoch nur soweit, daß keine Aussetzer auftreten, sie erfolgt über einen festzulegenden Zeitraum oder eine festlegbare Anzahl von Zündungen gegenüber den restlichen Zylindern der Verbrennungskraftmaschine, deren Zündzeitpunkte unverändert beibehalten werden.

Mit dem Eingriff in die Lage des oder der Zündzeitpunkte ist lediglich eine kurzfristige, leichte Komforteinbuße verbunden, die deutlich geringer ausfällt als bei einer Ausblendung der Kraftstoffeinspritzung an einem Zylinder der Verbrennungskraftmaschine. Der Eingriff hinsichtlich eines verspäteten Zündzeitpunktes eines oder mehrerer Zylinder erfolgt in geeigneten Motorbetriebsbereichen, in denen eine optimale Erkennung möglich ist. Die Einbußen hinsichtlich des Fahrkomforts halten sich in diesem Motorbetriebsbereich in Grenzen; ferner verschlechtert sich das Abgas nicht und der Verbrauch ändert sich nur unwesentlich. Die Verschiebung des Zündzeitpunktes an einem oder mehreren Zylindern der Verbrennungskraftmaschine erfolgt während solcher Fahrsituationen, in denen die Drehzahl der Verbrennungskraftmaschine weitestgehend konstant bleibt und keine ausgeprägten Beschleunigungsphasen auftreten.

Mittels einer Laufunruheerkennung, wie sie z.B. für die Zylindergleichstellungen eingesetzt wird, werden Drehzahlschwankungen detektiert. Der ausgewählte Bezugszylinder gibt ein kleineres Drehmoment ab, weil der Zündzeitpunkt und somit der Verbrennungsschwerpunkt bei diesem Zylinder später liegt bei diesem Zylinder. Aus der Detektion der Lage des Drehzahleinbruchs läßt sich folgern, ob die ursprünglich angenommene Phasenlage des Bezugszylinders richtig oder falsch war. Die erfindungsgemäß vorgeschlagene Detektionsmöglichkeit erlaubt den Betrieb einer mehrzylindrigen Verbrennungskraftmaschine bei nahezu optimalen Abgaswerten beim stöchiometrischen Luftverhältnis von λ = 1 zu betreiben.

Die erfindungsgemäße Lösung läßt sich sowohl an Verbrennungskraftmaschinen mit gerader als auch an solchen mit einer ungeraden Anzahl von Zylindern einsetzen.

### Ausführungsvarianten, detaillierte Beschreibung

In Motormanagementsystemen moderner, mehrzylindriger Verbrennungskraftmaschinen werden Phasengeberdefekte direkt erkannt, so daß Abhilferoutinen gemäß des erfindungsgemäß vorgeschlagenen Verfahrens zum Einsatz kommen. Ist keine Redundanz etwa durch einen weiteren funktionierenden Phasengeber vorhanden, wird die Verbrennungskraftmaschine anhand einer angenommenen Phasenlage gestartet. Diese angenommene Phasenlage kann beispielsweise derjenigen Phasenlage entsprechen, die beim Abstellen der Verbrennungskraftmaschine aufgetreten ist. Anhand dieser im Motormanagementsystem vorhandenen dauerhaft gespeicherten Position kann eine mehrzylindrige Verbrennungskraftmaschine gestartet werden. Es erfolgt z.B. bei Viertakt-Verbrennungskraftmaschinen eine Zündausgabe im OT nach dem Verdichtungstakt und nach dem Ausschiebetakt, mithin eine doppelte Zündausgabe. Die Überprüfung der angenommenen Phasenlage erfolgt erst dann, wenn die Verbrennungskraftmaschinen einen dafür geeigneten Betriebsbereich hinsichtlich Last, Drehzahl und Motortemperatur erreicht hat. Dies kann sowohl nach einiger Betriebszeit der Verbrennungskraftmaschine bei Leerlauf sein oder eine annähernd stationäre Betriebsphase mit konstanter Drehzahl und Teillast bei auf Betriebstemperatur erwärmter Verbrennungskraftmaschine.

Nach Erreichen eines geeignet erscheinenden Betriebsbereiches der Verbrennungskraftmaschine erfolgt gemäß des erfindungsgemäß vorgeschlagenen Verfahrens eine Verschiebung des Zündzeitpunktes auf einen späteren Zündzeitpunkt an einem Bezugszylinder oder an mehreren Bezugszylindern. Werden mehrere Bezugszylinder herangezogen, so erfolgt die verspätete Zündung an mehreren in Zündreihenfolge (bei Vierzylinderverbrennungskraftmaschinen Zündfolge 1-4-3-2) benachbarten Zylindern der Verbrennungskraftmaschine. Im Motormanagementsystem sind der oder die Zylinder, an denen eine Verschiebung des Zündzeitpunktes hin zu späteren Zündzeitpunkten erfolgt, bekannt.

An eine Verschiebung des Zündzeitpunktes hin auf spätere Zündzeitpunkte, schließt sich eine Laufunruheerkennungsroutine an, in der Drehzahlschwankungen der Verbrennungskraftmaschine ermittelt werden. Drehzahleinbrüche haben ihre Ursache darin, daß durch verspäteter Zündung des verdichteten Gemischs, das abgegebene Drehmoment kleiner ist. Damit ist der Beitrag des Bezugszylinders bzw. der Bezugszylinder zum Gesamtdrehmoment der Verbrennungskraftmaschine deutlich geringer. Ist ein Einbruch oder eine Drehzahl-ungleichförmigkeit detektiert worden, so wird untersucht, in welchem Bereich des Arbeitsspiels des Bezugszylinders der Drehzahleinbruch aufgetreten ist.

Treten die Drehzahleinbrüche deutlich erkennbar nach Zündung eines vermeintlich späteren gezündeten Zylinders ein, war die beim Start der Verbrennungskraftmaschine mit ausgefallenem Phasengeber angenommene Phasenlage richtig. Bei diesem Ergebnis kann auf normalen Motorbetrieb umgeschaltet werden, der Zündvorgang bei Erreichen des OT im Ladungswechseltakt kann mithin zurückgenommen werden. Ferner können bei als richtig detektierter Phasenlager winkelsynchron erfolgende Ereignisse wie z.B. Einspritzvorgänge freigegeben werden. Danach kann eine komplette Abschaltung der Phasendetektion erfolgen.

Tritt hingegen nach Zünd-OT am ausgewählten Bezugszylinder oder an den ausgewählten Bezugszylindem kein Drehzahleinbruch auf, war die ursprünglich angenommene Phasenlage der Verbrennungskraftmaschine falsch. Der gezündete Zylinder trägt seinen Beitrag zum Gesamtdrehmoment der Verbrennungskraftmaschine in voller Höhe bei. Das induzierte Ereignis, d.h. die Verspätung des Zündzeitpunktes hatte keinen Drehzahleinbruch am ausgewählten Zylinder zur Folge.

Handelt es sich bei der Verbrennungskraftmaschine um eine mehrzylindrige Verbrennungskraftmaschine mit gerader Zylinderzahl pro Bank bei V-Motoren, kann auch die Auswertung von Drehzahl-einbrüchen des um 360° Kurbelwinkel zum Bezugszylinder versetzten Zylinders erfolgen. Nach Zündung dieses Zylinders müßte ein Drehzahleinbruch auftreten; tritt der Drehzahleinbruch ein,so kann daraus geschlossen werden, daß die ursprünglich angenommene Phasenlage unrichtig war. Neben dem eigentlichen Bezugszylinder läßt sich demnach auch der um 360° versetzt zu diesem liegende Zylinder auswerten, so daß eine sichere Erkennung durch Beo-bachtung mehrerer Ereignisse möglich ist. Die Heranziehung des um 360° zum Bezugszylinder versetzten Zylinders zur Detektion von Drehzahleinbrüchen ist zwar lediglich an Verbrennungskraftmaschinen mit gerader Zylinderzahl pro Bank bei V-Motoren gegeben, jedoch handelt es sich bei den meisten, gängigen Viertakt-Verbrennungskraftmaschinen um solche mit gerader Zylinderanzahl. Bei diesen besteht der Vorteil, daß die Wirkung unmittelbar einem Zylinder zugeordnet werden kann.

Während bei Übereinstimmung von angenommener Phasenlage und detektierter Phasenlage eine Abschaltung der Phasendetektion vorgenommen werden kann, ist bei detektierter falscher Phasenlage eine Um- bzw. Neusynchronisation erforderlich. Ferner kann der Notbetrieb mit doppelter Zündausgabe am Ende des Verdichtungstaktes bzw. am Ende des Ausschiebetaktes aufrechterhalten werden. Erfolgt eine Neu- bzw. Umsynchronisation, sollte die Richtigkeit dieser Synchronisation anschließend nochmals überprüft werden.

Hat die Phasendetektion zu keinem eindeutigen Ergebnis geführt, z.B. aufgrund eines nicht stabilen Betriebszustandes der Verbrennungskraftmaschine oder anderer äußerer Einflüsse, kann die Testprozedur z. B. nach Ablauf eines Timers, sobald eine geeignete Fahrsituation eingetreten ist, beliebig oft wiederholt werden. Am Timer, der im Motormanagementsystem der Verbrennungskraftmaschine vorgesehen ist, kann die Zeitspanne, nach deren Ablauf eine Neubestimmung der Phasendetektion erfolgen kann, frei vorgewählt werden, d.h. die Warteintervalle sind flexibel und anpaßbar.

Erfolgt eine neue Phasendetektion an der Verbrennungskraftmaschine, so kann diese sowohl an den bisher ausgewählten Bezugszylinder als auch an neu auszuwählenden Bezugszylindern erfolgen. Die Durchführung des erfindungsgemäß vorgeschlagenen Verfahrens kann solange erfolgen, bis die wahre Phasenlage der Verbrennungskraftmaschine eindeutig erkannt ist.

Da dem erfindungsgemäß vorgeschlagenen Verfahren die Verschiebung des Zündzeitpunktes eines oder mehrerer Zylinder anstelle eines Eingriffs in die Kraftstoffeinspritzung zugrundeliegt, kann die Verbrennungskraftmaschine mit nahezu normalem Abgasverhalten, d.h. bei stöchiometrischem Luftverhältnis von λ = 1 betrieben werden. Im Gegensatz zu einer Einspritzausblendung halten sich die sich einstellenden Komforteinbußen in engen Grenzen. Das erfindungsgemäß vorgeschlagene Verfahren zur Phasendetektion an einer mehrzylindrischen Verbrennungskraftmaschine mit ausgefallenem Phasengeber kann an Verbrennungskraftmaschine mit gerader oder ungerader Zylinderzahl eingesetzt werden und erlaubt eine sichere Phasendetektion, da das Auftreten mehrerer Ereignisse beobachtet wird. Somit ist eine Phasendetektion mit hoher Zuverlässigkeit gewährleistet.

## Patentansprüche

1. Verfahren zur Phasenerkennung einer mehrzylindrigen, fremdgezündeten Verbrennungskraftmaschine mit gerader oder ungerader Zylinderanzahl, die mittels eines Motormanagementsystems betrieben wird, wobei sich der Arbeitszyklus der Verbrennungskraftmaschine über zumindest zwei Umdrehungen ihrer Ausgangswelle erstreckt, **dadurch gekennzeichnet, daß**
- die Verbrennungskraftmaschine bei unbekannter Phasenlage unter Annahme einer Phasenlage gestartet wird,
- an einem oder mehreren Zylindern mit doppelter Zündausgabe der Verbrennungskraftmaschine wird der Zündzeitpunkt der Zündung, die der angenommen Phasenlage Zugeordnet ist auf spätere Zündzeitpunkte verschoben,
- anhand der Detektion von Drehzahlschwankungen wird die eingangs angenommene Phasenlage verifiziert oder falsifiziert,
- bei falsifizierter angenommener Phasenlage wird ein Motorbetrieb mit doppelter Zündausgabe aufrechterhalten.

2. Verfahren gemäß Anspruch 1, **dadurch gekennzeichnet, daß** die mehreren Zylinder der Verbrennungskraftmaschine in Zündreihenfolge benachbarte Zylinder sind.

3. Verfahren gemäß Anspruch 1, **dadurch gekennzeichnet, daß** die Verbrennungskraftmaschine unter Annahme einer Phasenlage mit doppelter Zündausgabe am Ende des Verdichtungstaktes und am Ende des Ausschiebetaktes gestartet wird.

4. Verfahren gemäß Anspruch 1, **dadurch gekennzeichnet, daß** die Phasenerkennung der Verbrennungskraftmaschine in einem geeigneten Betriebsbereich der Verbrennungskraftmaschine hinsichtlich Last, Drehzahl und Motortemperatur erfolgt.

5. Verfahren gemäß Anspruch 1, **dadurch gekennzeichnet, daß** die eingangs angenommene Phasenlage der Verbrennungskraftmaschine verifiziert ist, wenn die Drehzahlschwankung im Segment nach Zündung des vermeintlich später gezündeten Zylinders detektiert wird.

6. Verfahren gemäß Anspruch 5, **dadurch gekennzeichnet, daß** bei verifizierter Phasenlage der Verbrennungskraftmaschine die doppelte Zündausgabe zurückgenommen wird und die winkelsynchronen Ereignisse freigegeben werden.

7. Verfahren gemäß Anspruch 1, **dadurch gekennzeichnet, daß** die eingangs angenommene Phasenlage der Verbrennungskraftmaschine falzifiziert ist, wenn im angenommenen Arbeitsktakt der Zylinder, bei welchen der Zündzeitpunkt verschoben ist, keine Drehzahlschwankung detektiert wird.

8. Verfahren gemäß Anspruch 7, **dadurch gekennzeichnet, daß** die eingangs angenommene Phasenlage der Verbrennungskraftmaschine falzifiziert ist, wenn im angenommenen Arbeitstakt der zum Zylinder mit verschobenem Zündzeitpunkt um 360° versetzten Zylinder eine Drehzahlschwankung festgestellt wird.

9. Verfahren gemäß der Ansprüche 7 oder 8, **dadurch gekennzeichnet, daß** bei falzifizierter Phasenlage eine Neu- oder Umsynchronisation der Phasenlage erfolgt.

10. Verfahren gemäß der Ansprüche 7 oder 8, **dadurch gekennzeichnet, daß** bei fehlgeschlagener Erkennung der Phasenlage nach Ablauf einer vorgebbaren Zeitspanne die Phasendetektion an gleichen oder an neu ausgewählten Zylindern der Verbrennungskraftmaschine wiederholt wird.

## Claims

1. Method for carrying out phase detection on a multi-cylinder, spark ignition, internal combustion engine which has an even or uneven number of cylinders and which is operated by means of an engine management system, the working cycle of the internal combustion engine extending over at least two revolutions of its output shaft, **characterized in that**
- when a phase angle is unknown, the internal combustion engine is started assuming a phase angle,
- the ignition time of the ignition which is assigned to the assumed phase angle is shifted to later ignition times at one or more cylinders with double ignition output of the internal combustion engine,
- the phase angle assumed at the beginning is verified or falsified by reference to the detection of fluctuations in rotational speed,
- when the assumed phase angle is falsified, an engine operating mode with double ignition output is maintained.

2. Method according to Claim 1, **characterized in that** the plurality of cylinders of the internal combustion engine are cylinders which are adjacent in the ignition sequence.

3. Method according to Claim 1, **characterized in that** the internal combustion engine is started assuming a phase angle with double ignition output at the end of the compression stroke and at the end of the expulsion stroke.

4. Method according to Claim 1, **characterized in that** the phase detection of the internal combustion engine takes place in a suitable operating range of the internal combustion engine in terms of load, rotational speed and engine temperature.

5. Method according to Claim 1, **characterized in that** the phase angle of the internal combustion engine which is assumed at the beginning is verified if the fluctuation in rotational speed is detected in the segment after ignition of the cylinder which supposedly has later ignition.

6. Method according to Claim 5, **characterized in that** when there is a verified phase angle of the internal combustion engine the double ignition output is cancelled and the angle-synchronous events are enabled.

7. Method according to Claim 1, **characterized in that** the phase angle of the internal combustion engine which is assumed at the beginning is falsified if no fluctuation in rotational speed is detected in the assumed working stroke of the cylinders at which the ignition time is shifted.

8. Method according to Claim 7, **characterized in that** the phase angle of the internal combustion engine which is assumed at the beginning is falsified if a fluctuation in rotational speed is detected in the assumed working stroke of the cylinders which are offset by 360° with respect to the cylinders with a shifted ignition time.

9. Method according to Claim 7 or 8, **characterized in that** when there is a falsified phase angle, the phase angle is resynchronized.

10. Method according to Claim 7 or 8, **characterized in that** when detection of the phase angle has failed, the phase detection is repeated at the same cylinders, or at newly selected cylinders, of the internal combustion engine after the expiry of a predefinable time period.

## Revendications

1. Procédé pour détecter la phase d'un moteur à combustion interne, à plusieurs cylindres en nombre pair ou impair et à allumage commandé, qui fonctionne à l'aide d'un système de gestion du moteur, le cycle opératoire du moteur à combustion interne s'étendant sur au moins deux tours de son arbre de sortie,
**caractérisé en ce que**
- lorsque la position de phase est inconnue, le moteur à combustion interne démarre en supposant une position de phase,
- sur un ou sur plusieurs cylindres à double émission d'allumage du moteur à combustion interne, l'instant de l'allumage associé à la position de phase supposée est reporté à des instants d'allumage ultérieurs,
- la position de phase supposée au début est jugée vraie ou fausse en détectant les variations de la vitesse de rotation,
- lorsque la position de phase supposée est fausse, on maintient un fonctionnement de moteur à double émission d'allumage.

2. Procédé selon la revendication 1,
**caractérisé en ce que**
les multiples cylindres du moteur à combustion interne sont des cylindres voisins dans l'ordre d'allumage.

3. Procédé selon la revendication 1,
**caractérisé en ce que**
le moteur à combustion interne est démarré en supposant une position de phase à double émission d'allumage à la fin du temps de compression et à la fin du temps de décalage.

4. Procédé selon la revendication 1,
**caractérisé en ce que**
la phase du moteur à combustion interne est détectée dans une gamme adaptée de fonctionnement du moteur à combustion interne quant à la charge, la vitesse de rotation et la température du moteur.

5. Procédé selon la revendication 1,
**caractérisé en ce que**
la position de phase supposée au début du moteur à combustion interne est considérée comme vraie quand la variation de la vitesse de rotation est détectée dans le segment après que le cylindre considéré comme allumé le plus tard a été allumé.

6. Procédé selon la revendication 5,
**caractérisé en ce que**
lorsque la position de phase du moteur à combustion interne est considérée comme vraie, la double répartition d'allumage cesse et les phénomènes en synchronie angulaire sont libérés.

7. Procédé selon la revendication 1,
**caractérisé en ce que**
la position de phase supposée au début du moteur à combustion interne est considérée comme fausse quand aucune variation dans la vitesse de rotation n'est détectée dans le rythme opératoire supposé des cylindres pour lequel l'instant d'allumage est décalé.

8. Procédé selon la revendication 7,
**caractérisé en ce que**
la position de phase supposée au début du moteur à combustion interne est considérée comme fausse quand une variation de vitesse de rotation est reconnue dans le rythme opératoire des cylindres déplacés de 360° par rapport au cylindre dont l'instant d'allumage est décalé.

9. Procédé selon la revendication 7 ou 8,
**caractérisé en ce que**
la position de phase est soumise à une synchronisation nouvelle ou modifiée lorsque la position de phase est considérée comme fausse.

10. Procédé selon la revendication 7 ou 8,
**caractérisé en ce que**
après un temps prédéfini, la détection de phase est répétée sur les mêmes cylindres du moteur à combustion interne ou sur des cylindres nouvellement sélectionnés lorsque la détection de la position de phase est considérée comme fausse.
